(19) Europäisches Patentamt
European Patent Office
Office européen des brevets

(11) **EP 3 171 019 B1**

(12) **EUROPÄISCHE PATENTSCHRIFT**

(45) Veröffentlichungstag und Bekanntmachung des Hinweises auf die Patenterteilung:
**29.05.2019 Patentblatt 2019/22**

(21) Anmeldenummer: **16198989.2**

(22) Anmeldetag: **15.11.2016**

(51) Int Cl.:
*F03B 3/18* *(2006.01)*      *F03B 15/16* *(2006.01)*
*F03B 17/06* *(2006.01)*      *H02P 9/04* *(2006.01)*
*H02P 9/10* *(2006.01)*

(54) **VERFAHREN ZUM BETRIEB EINES LAUFWASSERKRAFTWERKS**

METHOD FOR OPERATING A RUN-OF-RIVER POWERPLANT

PROCÉDÉ DE FONCTIONNEMENT D'UNE CENTRALE HYDRAULIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.11.2015 DE 102015222666**

(43) Veröffentlichungstag der Anmeldung:
**24.05.2017 Patentblatt 2017/21**

(73) Patentinhaber: **RWE Power Aktiengesellschaft
45128 Essen (DE)**

(72) Erfinder: **LOSKAND, Martin
58099 Hagen (DE)**

(74) Vertreter: **KNH Patentanwälte Neumann Heine Taruttis PartG mbB
Postfach 10 33 63
40024 Düsseldorf (DE)**

(56) Entgegenhaltungen:
**DE-C1- 4 220 255      DE-T2- 69 712 686
US-A1- 2012 146 330**

**Beschreibung**

Die Erfindung betrifft ein Verfahren zum Betrieb eines Laufwasserkraftwerks mit wenigstens einer Staustufe, die zwischen einem Oberwasser und einem Unterwasser angeordnet ist, mit wenigstens eine Turbine, die wenigstens eine verstellbare Leitschaufelanordnung und/oder wenigstens eine verstellbare Laufschaufelanordnung aufweist, und mit wenigstens einem Generator zur Bereitstellung von elektrischer Leistung in ein Stromnetz, wobei ein Zufluss in das Oberwasser und ein Abfluss von dem Oberwasser in das Unterwasser im Wesentlichen gleich sind und wobei das Verfahren ohne eine Aufspeicherung von Wasser durchgeführt wird.

Laufwasserkraftwerke sind Wasserkraftwerke, bei denen der Zufluss oberhalb des zugehörigen Stauwehrs und der Abfluss unterhalb des Kraftwerks im Leistungsbetrieb stets gleich sind, also kein Aufspeichern von Wasser zur ökonomischen Nutzung bei Verbrauchs- und Zuflussschwankungen erfolgt. Solche Laufwasserkraftwerke sind auch als Flusswasserkraftwerke bekannt, bei denen das Flusswasser durch eine Wasserturbine geleitet wird, die die potentielle Energie des Wassers in eine mechanische Drehbewegung umwandelt. Diese Drehbewegung treibt einen Generator an. Um die Gefällehöhe zu steigern, wird mittels eine Wehranlage beziehungsweise mittels eine Staustufe das Flusswasser aufgestaut. Der Wasserstand im entstehenden Rückstauraum, der auch als Oberwasser bezeichnet wird, wird während des Betriebs konstant gehalten. Die Fallhöhe als Höhenunterschied zwischen Oberwasser und Unterwasser sowie die Durchflussmenge bestimmen das das Arbeitsvermögen des Kraftwerks.

Eine Leistungsregelung solcher Laufwasserkraftwerke ist normalerweise nicht vorgesehen.

Insbesondere wegen der Einspeisung von elektrischer Leistung aus sogenannten regenerativen Energiequellen ist es in jüngster Zeit besonders wichtig, unvorhergesehene Schwankungen zwischen Einspeisung und Entnahme von Strom aus dem Netz durch Bereitstellung von sogenannter Sekundärregelleistung auszugleichen. Grundsätzlich wird zwischen den Regelleistungsarten Primärregelleistung, Sekundärregelleistung und Minutenreserve unterschieden. Diese verschiedenen Regelleistungsarten unterscheiden sich hinsichtlich ihrer Aktivierungs- und Änderungsgeschwindigkeit. Primär- und Sekundärregelleistungen werden vom Übertragungsnetzbetreiber automatisch aus regelfähigen Kraftwerken abgerufen und werden ständig in unterschiedlicher Höhe und Richtung benötigt. Hierbei muss Primärregelleistung in Deutschland innerhalb von 30 Sekunden und Sekundärregelleistungen innerhalb von 5 Minuten im jeweils erforderlichen Umfang vollständig bereitgestellt werden.

Es gibt daher einen zunehmenden Bedarf an Bereitstellung von Sekundärregelleistung, weswegen beispielsweise in der DE 10 2004 013 907 A1 ein Verfahren und eine Vorrichtung zur Leistungsregelung eines Pumpspeicherkraftwerks vorgeschlagen wird, wobei gemäß diesem Verfahren die Leistungsanforderung eines Stromnetzes überwacht und bei Netzleistungsbedarf mithilfe wenigstens einer Turbine und eines damit gekuppelten Motorgenerators erzeugter Strom unter Leistungsregelung an das Stromnetz geliefert wird, hingegen bei Leistungsüberschuss im Stromnetz Strom aus dem Stromnetz bezogen und zumindest einer Pumpe zum Pumpen von Wasser aus einem Unterbecken in ein Oberbecken zugeführt wird, wobei bei Leistungsüberschuss auch die Turbine in einem hydraulischen Kurzschluss mit der Pumpe betrieben und hinsichtlich ihrer Leistungsabgabe geregelt wird.

Eine solche Regelungsfähigkeit besitzen Laufwasserkraftwerke normalerweise nicht, diese können zwar einen vorgegebenen Lastgradienten sehr schnell nachfahren, sie sind allerdings dazu verpflichtet, jederzeit so viel Wasser weiterzugeben wie ihnen zufließt. Wird die Leistung gedrosselt, muss ein Wehr oder eine Staustufe geöffnet werden, wobei allerdings hiermit Reaktionszeiten, wie sie zur Erbringung von Sekundärregelleistungen notwendig wären, nicht erreicht werden können. Eine Sicherstellung einer Stauhaltung, wie sie beispielsweise für die Schifffahrt zwingend erforderlich ist, wäre nicht gewährleistet.

Aus der DE 697 12 686 T2 ist ein Verfahren zur Optimierung der Leistung einer Kaplan-Turbine bekannt, wobei sich das Verfahren auf die Optimierung des Betriebspunkts der Turbine beschränkt.

Der Erfindung liegt daher die Aufgabe zugrunde, ein Verfahren zum Betrieb eines Laufwasserkraftwerks der eingangs genannten Art bereitzustellen, das der vorstehenden Problematik Rechnung trägt.

Die Aufgabe wird gelöst mit den Merkmalen des Anspruchs 1.

Vorteilhafte Ausgestaltungen des Verfahrens gemäß der Erfindung ergeben sich aus den Unteransprüchen.

Ein Gesichtspunkt der Erfindung betrifft ein Verfahren zum Betrieb eines Laufwasserkraftwerks mit wenigstens einer Staustufe, die zwischen einem Oberwasser und einem Unterwasser angeordnet ist, mit wenigstens einer Turbine, die wenigstens eine verstellbare Leitschaufelanordnung und/oder wenigstens eine verstellbare Laufschaufelanordnung aufweist, und wenigstens mit einem Generator zur Bereitstellung von elektrischer Leistung in ein Stromnetz, wobei ein Zufluss in das Oberwasser und ein Abfluss von dem Oberwasser in das Unterwasser im Wesentlichen gleich sind und wobei das Verfahren ohne Aufspeicherung von Wasser durchgeführt wird, wobei das Laufwasserkraftwerk in einem Leistungsbetrieb und in einem Regelbetrieb betrieben wird, wobei im Regelbetrieb eine Leistungsregelung innerhalb eines vorgesehenen Regelleistungsbereichs bei konstanter Durchflussrate durch die Turbine vorgesehen ist.

Unter dem Begriff "Durchflussrate" wird im Sinne der Erfindung eine Durchflussmenge pro Zeiteinheit verstanden.

Bei dem Verfahren gemäß der Erfindung ist vorgesehen, dass im Regelbetrieb eine Verstellung der Leitschaufelanordnung und/oder der Laufschaufelanordnung und/oder der Drehzahl der Turbine, innerhalb des Regelleistungsbereichs in Abhängigkeit einer Regelleistungsanforderung vorgenommen wird. Die Regelung der Drehzahl der Turbine kann beispielsweise mittelbar über die Veränderung der Drehzahl des Generators, beispielsweise mittels eines Frequenzumformers erfolgen.

Bei Turbinen mit Leit- und Laufschaufelverstellung kann durch eine Änderung der Leitradöffnung, bewirkt durch die Leitradverstellung, der Massenstrom und damit die Turbinenleistung variiert werden. Eine solche Änderung bewirkt in der Regel eine ungünstige Anströmung des Laufrades und damit eine Erhöhung der Stoßverluste beziehungsweise eine Verschlechterung des Wirkungsgrades. Um diesen Nachteil zu kompensieren, kann auch das Laufrad verstellt werden. Durch eine gekoppelte Leit- und Laufschaufelerstellung ist grundsätzlich eine Optimierung des Wirkungsgradverlaufs und damit eine Verbessung eines Teillastverhaltens möglich. Vergleichbare Optimierungen können durch die Kombination einer Leitradverstellung oder einer Laufradverstellung mit einem drehzahlvariablen Generator erzielt werden. Grundsätzlich ist erfindungsgemäß vorgesehen, dass der Wirkungsgrad in einem bestimmten Betriebspunkt bei gleichem Massenstrom beziehungsweise bei gleicher Durchflussrate verschlechtert wird, um auf diese Art und Weise das ankommende Wasser weiterhin bei verringerter elektrischer Leistung durch die Turbine zu leiten.

Deswegen ist erfindungsgemäß vorgesehen, die Turbine im Leistungsbetrieb in einen optimalen Betriebspunkt im Sinne eines optimalen Wirkungsgrades zu betreiben und die Turbine in einem Regelbetrieb bei einer Durchflussrate, die diejenigen im Leistungsbetrieb entspricht, in einem nicht optimalen Betriebspunkt zu betreiben.

Dazu ist es lediglich erforderlich, eine Steuereinrichtung zur Regelung der Turbine um eine weitere Zusammenhangskurve (Leitradöffnung zur Laufradöffnung Leitradöffnung zu Drehzahl oder Laufradöffnung zu Drehzahl) zu erweitern.

Das Verfahren gemäß der Erfindung sieht eine Umschaltung des Laufwasserkraftwerks von einem Leistungsbetrieb in einen Regelbetrieb in Abhängigkeit einer Sekundärleistungsanforderung eines Übertragungsnetzbetreibers vor. Grundsätzlich ist im Rahmen der Erfindung auch ein kontinuierlicher Regelbetrieb des Laufwasserkraftwerks zwischen einer Maximalleistung und einer verringerten Regelleistung möglich.

Erfindungsgemäß ist eine systematische Wirkungsgradverschlechterung der Turbine im Regelbetrieb bei einer konstanten Durchflussrate vorgesehen.

Eine Regelung der Turbine kann beispielsweise stufenlos erfolgen, im Sinne einer stufenlosen Verstellung der Leitschaufelanordnung und/oder der Laufschaufelanordnung und/ oder der Drehzahl.

Eine Variante des Verfahrens erfordert die Möglichkeit der Verstellbarkeit sowohl der Leitschaufelanordnung als auch der Laufschaufelanordnung, da eine Turbine eines Wasserkraftwerks für unterschiedliche Durchflussraten unterschiedliche Betriebspunkte im Sinne einer bestimmten Stellung der Leitschaufelanordnung und einer bestimmten Stellung der Laufschaufelanordnung aufweist, in denen der Wirkungsgrad bei verschiedenen Durchflussraten maximal ist. Zu einer bestimmten Stellung der Leitschaufelanordnung und der Laufschaufelanordnung bei einer gegebenen Durchflussrate mit maximalem Wirkungsgrad lässt sich eine andere Kombination der Stellung der Leitschaufelanordnung und der Laufschaufelanordnung bei gleicher Durchflussrate mit verringertem Wirkungsgrad finden.

Alternativ oder zusätzlich kann das Verfahren die Regelung der Drehzahl der Turbine umfassen. Zu einer bestimmten Kombination aus Leitschaufelstellung, Laufschaufelstellung und Drehzahl bei einer gegebenen Durchflussrate mit maximalem Wirkungsgrad lässt sich eine andere Kombination der Leitschaufelstellung, der Laufschaufelstellung und der Drehzahl bei gleicher Durchflussrate mit verringertem Wirkungsgrad finden.

Dies lässt sich beispielsweise bei einer stufenlosen Regelung der Turbine über eine Kennlinie oder ein Kennfeld verschiedener Betriebspunkte der Turbine bei gleicher Durchflussrate steuern. Daher ist in diesem Falle zweckmäßigerweise vorgesehen, die Durchflussrate durch die Turbine fortlaufend zu messen und im Regelbetrieb des Laufwasserkraftwerks eine Kennfeldsteuerung der Verstellung der Leitschaufelanordnung und/oder der Laufschaufelanordnung und /oder der Drehzahl vorzusehen, wobei die hierzu verwendeten Kennfelder den Zusammenhang zwischen mindestens zwei Regelgrößen (Leitschaufelstellung, Laufschaufelstellung, Drehzahl) und den daraus resultierenden Werten für einen Wirkungsgrad wiedergeben. Bei einer stufenlosen Leistungsregelung der Turbine ist es grundsätzlich erforderlich, die angesteuerten Betriebspunkte hinsichtlich ihrer Kenndaten (Leistung/Durchflussrate) zu kennen. Daher ist es vorteilhaft, wenn für die Turbine eine Durchflussmessung vorliegt. Auf diese Art und Weise kann jede beliebige Leistungsreduzierung mit einer Genauigkeit von wenigen kW erreicht werden. Grenzen sind dem nur durch das Schwingungsverhalten der Turbine, durch die Bezugsleistung im Leerlauf, durch Schallimmissionen der Turbine sowie durch die Kavitation an der Laufschaufelanordnung gesetzt.

Alternativ zu einer stufenlosen Regelung der Turbine kann eine gestufte Regelung der Turbine im Sinne einer Verstellung der Leitschaufelanordnung und/oder der Laufschaufelanordnung und/oder der Drehzahl vorgesehen sein, wobei jedem Betriebspunkt der Turbine mit maximalem Wirkungsgrad ein Betriebspunkt mit verminderter Leistung beziehungsweise vermindertem Wirkungsgrad bei gleicher Durchflussrate zugeordnet wird. So kann von dem Betriebspunkt mit maximalem Wirkungsgrad auf die zur Verfügung stehende Regelleistung geschlossen werden. Eine Umschaltung zwischen Leistungsbetrieb und Regelbetrieb kann durch die Einbindung einer veränderten Zusammenhangskurve (Leitradöffnung zur Laufradöffnung, Leitradöffnung zu Drehzahl oder Laufradöffnung zu Drehzahl) in der elektronischen Regeleinrichtung für die Turbine erfolgen. Eine solche elektronische Regeleinrichtung wird im Allgemeinen auch vereinfacht als sogenannter Turbinenregler bezeichnet. Durch einen Turbinenregler können die Verstellung der Laufschaufelanordnung, die Verstellung der Leitschaufelanordnung, die Drehzahl und andere Parameter geregelt werden. Darüber hinaus ist üblicherweise auch eine Wasserstandsregelung beziehungsweise Pegelregelung vorgesehen, die den Durchfluss durch die Turbine dem Zufluss entsprechend anpasst.

Erfindungsgemäß ist vorgesehen, dass als Regelleistungsbereich ein Leistungsbereich zwischen einer Nennleistung und einer Minimalleistung in Höhe von etwa 40 % der Nennleistung verwendet wird.

Zweckmäßigerweise wird als doppelt regulierbare Turbine im Sinne der vorliegenden Erfindung eine Kaplanturbine verwendet.

Das Laufwasserkraftwerk gemäß der Erfindung kann mehrere Staustufen sowie mehrere Turbinen umfassen. Das erfindungsgemäße Verfahren ist vorstehend anhand einer einzigen Turbine erläutert worden.

Die Erfindung wird nachstehend anhand dreier in den Figuren dargestellter Diagramme erläutert.

Es zeigen:

Figur 1:     Durchfluss und Leistung einer doppelt regulierten Turbine in Abhängigkeit des Zusammenhangs (Zusammenhangskurve) zwischen Laufrad und Leitrad,

Figur 2:     das theoretische Regelpotential der Turbine durch Absenkung des Wirkungsgrades unter Beibehaltung der Durchflussrate und

Figur 3:     das in Figur 1 dargestellte Diagramm ergänzt um eine zweite Zusammenhangskurve für den Regelbetrieb der Turbine

Das erfindungsgemäße Verfahren wird bevorzugt an einem Laufwasserkraftwerk durchgeführt, das ein Oberwasser, ein Unterwasser und wenigstens eine dazwischen angeordnete Staustufe mit einer doppelt regulierbaren Turbine in Form einer Kaplanturbine umfasst. Ziel des Verfahrens ist eine Leistungsreduktion unter Beibehaltung des Durchflusses beziehungsweise der Durchflussrate durch die Turbine.

Die Leistung P, welche gezielt reduziert werden soll, ergibt sich aus folgender Gleichung:

$$P = Q \cdot \dot{\rho} \, g \cdot h \cdot \eta,$$

wobei Q die Durchflussrate in m$^3$ pro Sekunde, g die Gravitationskonstante, h die die Fallhöhe in Metern, ρ die Dichte und η den Wirkungsgrad bezeichnen. Bei dem Verfahren gemäß der Erfindung ist die Durchflussrate konstant, die Gravitationskonstante und die Fallhöhe sind gegebene Größen, sodass eine Variation der Leistung über die Beeinflussung des Wirkungsgrads erfolgt. Dies erfolgt über die Beeinflussung der Stoßverluste beziehungsweise über eine Verschlechterung des Wirkungsgrades der erfindungsgemäß verwendeten zweifach regulierten Turbine (Kaplanturbine). Der Turbinenwirkungsgrad ist maßgeblich durch eine stoßarme Anströmung der Turbinenschaufeln beziehungsweise der Laufschaufeln bestimmt. Die verlustarme Anströmung ergibt sich aus der optimalen Einstellung von Leitradwinkel zu Laufradwinkel und Drehzahl. Wird dieser Zusammenhang ungünstiger, so verschlechtert sich der Wirkungsgrad. Bei einer doppelt regulierten Maschine wie bei einer Kaplanturbine lässt sich derselbe Durchfluss (Durchflussrate) mit unterschiedlichen Schaufelstellungen und Wirkungsgraden erreichen.

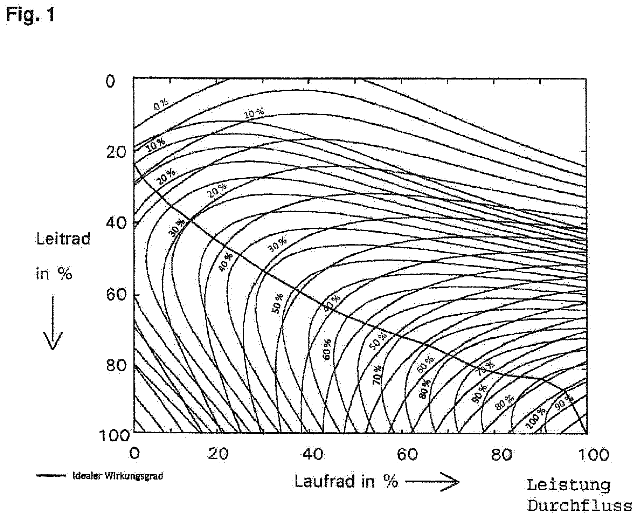

Die beigefügte Figur 1 zeigt einen Graphen, bei dem Leistung, Durchfluss und Wirkungsgrad in Abhängigkeit von Leitrad- und Laufradöffnungen dargestellt sind. Leitrad-und Laufradöffnung sind in Prozent der Öffnung in den Betriebspunkt angegeben. Die mit 1 bezeichnete Linie verbindet alle Betriebspunkte der Turbine mit idealem Wirkungsgrad.

Die Anwahl dieser Betriebspunke wird technisch im Leistungsbetrieb beziehungsweise im Normalbetrieb des Laufwasserkraftwerks angestrebt. Die Linie entspricht in etwa der in einem Turbinenregler für die jeweilige Fallhöhe hinterlegten Zusammenhangskurve.

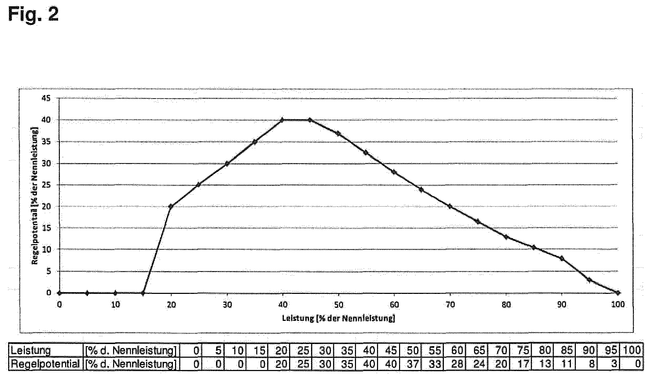

Figur 2 zeigt das erfindungsgemäß erwartete Regelpotential durch Absenkung des Wirkungsgrades unter Beibehaltung der Durchflussrate in Abhängigkeit einer optimalen Turbinenleistung. Auf der Abszisse ist die Leistung in % der Nennleistung aufgetragen, auf der Ordinate das Regelpotential in % der Nennleistung.

Daraus kann gefolgert werden, dass in einem mittleren und unteren Leistungsbereich einer zweifach regulierten Turbine eine Regulierung über einen großen Leistungsbereich bei konstanter Durchflussrate möglich ist.

Erfindungsgemäß ist vorgesehen, jedem regulären Betriebspunkt der Turbine mit maximalem Wirkungsgrad einen Betriebspunkt mit gleichem Durchfluss und minimaler Leistung zuzuordnen. So kann aus dem normalen Betriebspunkt auf die zur Verfügung stehende Regelleistung geschlossen werden. Eine Umschaltung zwischen Normalbetrieb und Regelbetrieb kann durch die Einbindung eines veränderten Laufrad-/Leitradzusammenhangs in dem Turbinenregler erfolgen, während das Laufwasserkraftwerk unter Verwendung der Pegelregelung den aktuellen Durchfluss aufrechterhält.

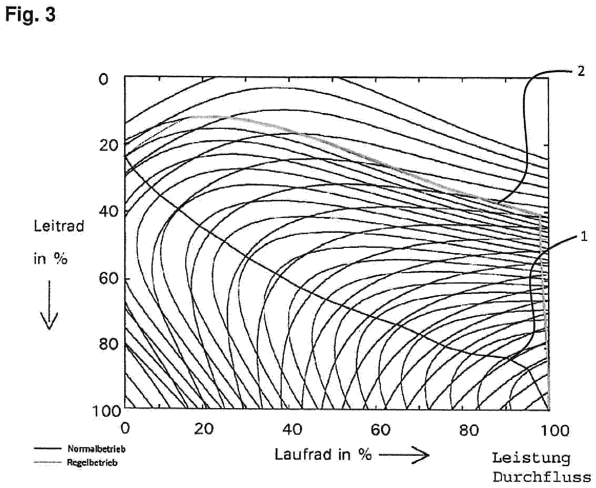

Zum Veranschaulichen dessen sind in Figur 3, die in etwa der Darstellung gemäß Figur 1 entspricht, die Zusammenhangskurven für den Leistungsbetrieb und den Regelbetrieb des Laufwasserkraftwerks dargestellt, wobei die Zusammenhangskurve für den Leistungsbetrieb mit dem Bezugzeichen 1 versehen ist und die Zusammenhangskurve für den Regelbetrieb mit dem Bezugzeichen 2 versehen ist.

Wie vorstehend bereits erwähnt, weicht die im Leistungsbetrieb angesteuerte Zusammenhangskurve von einer idealen Zusammenhangskurve ab, da die Betriebspunkte des maximalen Wirkungsgrads zwar technisch angestrebt sind, aber aufgrund anderer Umstände nicht notwendigerweise erreicht werden.

Bei der Vorgabe der in Figur 3 dargestellten Zusammenhangskurve 2 für den Regelbetrieb müssen verschiedene Randbedingungen beachtet werden. Die maximal erreichbare Durchflussrate muss identisch zur Durchflussrate im Leistungsbetrieb sein, damit zu keinem Zeitpunkt Wasser über die Staustufe abgegeben werden muss. Weiterhin müssen die betrieblichen Vorgaben wie Mindestleistung, Schwingungsverhalten, Kavitationsbelastung sowie andere individuelle Schwachstellen der Turbine berücksichtigt werden.

Die Betriebspunkte gleichen Durchflusses im Leistungs- und Regelbetrieb müssen für jede Turbine des Laufwasserkraftwerks gesondert unter Betriebsbedingungen empirisch ermittelt werden, sofern keine maschinengenaue Durchflussmessung vorliegt.

**Patentansprüche**

1. Verfahren zum Betrieb eines Laufwasserkraftwerks mit wenigstens einer Staustufe, die zwischen einem Oberwasser und einem Unterwasser angeordnet ist, mit wenigstens einer Turbine, die wenigstens eine verstellbare Leitschaufelanordnung und/oder wenigstens eine verstellbare Laufschaufelanordnung aufweist, und mit wenigstens einem Generator zur Bereitstellung von elektrischer Leistung in ein Stromnetz, **dadurch gekennzeichnet, dass** ein Zufluss in das Oberwasser und ein Abfluss von dem Oberwasser in das Unterwasser gleich gehalten werden und wobei das Verfahren ohne Aufspeicherung von Wasser durchgeführt wird, wobei das Laufwasserkraftwerk in einem Leistungsbetrieb und in einem Regelbetrieb betrieben wird, wobei im Regelbetrieb eine Leistungsregelung innerhalb eines vorgesehenen Regelleistungsbereichs bei konstanter Durchflussrate durch die Turbine vorgesehen ist, derart, dass

   im Regelbetrieb eine Verstellung der Leitschaufelanordnung und/oder der Laufschaufelanordnung und/ oder der Drehzahl der Turbine innerhalb des Regelleistungsbereichs in Abhängigkeit einer Regelleistungsanforderung vorgenommen wird.

2. Verfahren nach Anspruch 1, **dadurch gekennzeichnet, dass** die Turbine im Leistungsbetrieb in einem optimalen Betriebspunkt im Sinne eines optimalen Wirkungsgrades betrieben wird.

3. Verfahren nach einem der Ansprüche 1 oder 2, **dadurch gekennzeichnet, dass** die Turbine in einem Regelbetrieb bei einer Durchflussrate, die derjenigen im Leistungsbetrieb entspricht, in einem nicht optimalen Betriebspunkt betrieben wird.

4. Verfahren nach einem der Ansprüche 1 bis 3, **dadurch gekennzeichnet, dass** eine Stufenlose Regelung der Turbine im Sinne einer Verstellung der Leitschaufelanordnung und/oder der Laufschaufelanordnung vorgesehen ist.

5. Verfahren nach Anspruch 4, **dadurch gekennzeichnet, dass** die Durchflussrate durch die Turbine fortlaufend gemessen wird und dass im Regelbetrieb des Laufwasserkraftwerks eine Kennfeldsteuerung der Verstellung der Leitschaufelanordnung und/oder der Laufschaufelanordnung und/oder der Drehzahl vorgesehen ist, wobei die hierzu verwendeten Kennfelder den Zusammenhang zwischen mindestens zwei Regelgrößen und daraus resultierenden Werten für einen Wirkungsgrad wiedergeben.

6. Verfahren nach einem der Ansprüche 1 bis 5, **dadurch gekennzeichnet, dass** eine gestufte Regelung der Turbine im Sinne einer Verstellung der Leitschaufelanordnung und/oder der Laufschaufelanordnung vorgesehen ist, wobei jedem Betriebspunkt der Turbine mit maximalem Wirkungsgrad ein Betriebspunkt mit verminderter Leistung bei gleicher Durchflussrate zugeordnet wird.

7. Verfahren nach einem der Ansprüche 1 bis 6, **dadurch gekennzeichnet, dass** als Regelleistungsbereich ein Leistungsbereich zwischen einer Nennleistung und einer Minimalleistung in Höhe von etwa 40 % der Nennleistung verwendet wird.

8. Verfahren nach einem der Ansprüche 1 bis 7, **gekennzeichnet durch** die Verwendung wenigstens einer Kaplanturbine als regelbare Turbine.

**Claims**

1. Method for operating a run-of-river power station comprising at least one barrage arranged between upstream water and downstream water, comprising at least one turbine that has at least one adjustable guide vane arrangement and/or at least one adjustable rotor blade arrangement, and comprising at least one generator for providing electrical power into a power network, **characterized in that** an inflow into the upstream water and an outflow from the upstream water into the downstream water are kept equal and the method being carried out without storing water, the run-of-river power station being operated in a power mode and in a reserve mode, the power being varied within a predefined reserve power range at a constant through-flow rate through the turbine in reserve mode such that the guide vane arrangement and/or the rotor blade arrangement and/or the speed of the turbine are adjusted within the reserve power range in reserve mode on the basis of a reserve power demand.

2. Method according to claim 1, **characterized in that**, in power mode, the turbine is operated at an optimum operating point with regard to an optimum efficiency.

3. Method according to either claim 1 or claim 2, **characterized in that**, in a reserve mode, the turbine is operated at a non-optimum operating point at a through-flow rate that corresponds to the through-flow rate in power mode.

4. Method according to any of claims 1 to 3, **characterized in that** the turbine is varied steplessly by adjusting the guide vane arrangement and/or the rotor vane arrangement.

5. Method according to claim 4, **characterized in that** the though-flow rate through the turbine is measured continuously, and **in that**, in the reserve mode of the run-of-river power station, the adjustment of the guide vane arrangement and/or the rotor blade arrangement and/or the speed is controlled on the basis of characteristic maps, the characteristic maps used for this purpose displaying the relationship between at least two control variables and values for an efficiency resulting therefrom.

6. Method according to any of claims 1 to 5, **characterized in that** the turbine is varied in a stepped manner by adjusting the guide vane arrangement and/or the rotor blade arrangement, each operating point of the turbine that has maximum efficiency being associated with an operating point that has reduced power at the same through-flow rate.

7. Method according to any of claims 1 to 6, **characterized in that** a power range between a nominal power and a minimum power of approximately 40% of the nominal power is used as a reserve power range.

8. Method according to any of claims 1 to 7, **characterized by** the use of at least one Kaplan turbine as a variable turbine.

**Revendications**

1. Procédé de fonctionnement d'une centrale hydraulique, comportant au moins un barrage situé entre un cours d'eau en amont et un cours d'eau en aval, au moins une turbine présentant au moins un agencement d'aubes directrices ajustable et/ou au moins un agencement d'aubes mobiles ajustable, et au moins un générateur pour la fourniture d'énergie électrique dans un réseau d'électricité, **caractérisé en ce qu'**un flux entrant dans le cours d'eau en amont et un flux sortant en provenance du cours d'eau amont et à destination du cours d'eau en aval sont maintenus à l'identique, et le procédé étant mis en oeuvre sans stockage d'eau, la centrale hydraulique étant exploitée selon un mode de performance et selon un mode régulé, une régulation de puissance à l'intérieur d'une plage de puissance régulée étant prévue en mode régulé à débit constant à travers la turbine, de sorte qu'en mode régulé, un réglage de l'agencement d'aubes directrices et/ou de l'agencement d'aubes mobiles et/ou de la vitesse de rotation de la turbine est effectué dans la plage de puissance régulée en fonction d'une demande de puissance régulée.

2. Procédé selon la revendication 1, **caractérisé en ce qu'**en mode performance, la turbine est exploitée à un point de fonctionnement optimal, au sens d'un niveau de rendement optimal.

3. Procédé selon l'une des revendications 1 ou 2, **caractérisé en ce qu'**en mode régulé, à un débit correspondant à celui du mode performance, la turbine est exploitée à un point de fonctionnement non optimal.

4. Procédé selon l'une des revendications 1 à 3, **caractérisé en ce qu'**il est prévu une régulation en continu de la turbine, au sens d'un réglage de l'agencement d'aubes directrices et/ou d'aubes mobiles.

5. Procédé selon la revendication 4, **caractérisé en ce que** le débit dans la turbine est mesuré en continu à travers la turbine et **en ce que**, lorsque la centrale hydraulique fonctionne en mode régulé, une commande à champs caractéristiques du réglage de l'agencement d'aubes directrices et/ou de l'agencement d'aubes mobiles et/ou de la vitesse de rotation est prévue, les champs caractéristiques utilisés à cet effet reproduisant, pour un niveau de rendement, la relation entre au moins deux variables régulées et les valeurs qui en découlent.

6. Procédé selon l'une des revendications 1 à 5, **caractérisé en ce qu'**il est prévu une régulation échelonnée de la turbine, au sens d'un réglage de l'agencement d'aubes directrices et/ou d'aubes mobiles, un point de fonctionnement avec performance réduite à débit égal étant associé à chaque point de fonctionnement de la turbine avec niveau de rendement maximal.

7. Procédé selon l'une des revendications 1 à 6, **caractérisé en ce qu'**une plage de puissance comprise entre une puissance nominale et une puissance minimale à hauteur d'environ 40 % de la puissance nominale est utilisée comme plage de puissance régulée.

8. Procédé selon l'une des revendications 1 à 7, **caractérisé par** l'utilisation d'au moins une turbine Kaplan en tant que turbine réglable.

**Fig. 1**

Leitrad in %

Idealer Wirkungsgrad

Laufrad in % ⟶

Leistung
Durchfluss

## Fig. 2

| Leistung | [% d. Nennleistung] | 0 | 5 | 10 | 15 | 20 | 25 | 30 | 35 | 40 | 45 | 50 | 55 | 60 | 65 | 70 | 75 | 80 | 85 | 90 | 95 | 100 |
|---|---|---|---|---|---|---|---|---|---|---|---|---|---|---|---|---|---|---|---|---|---|---|
| Regelpotential | [% d. Nennleistung] | 0 | 0 | 0 | 0 | 20 | 25 | 30 | 35 | 40 | 40 | 37 | 33 | 28 | 24 | 20 | 17 | 13 | 11 | 8 | 3 | 0 |

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004013907 A1
- DE 69712686 T2